# EUROPEAN PATENT APPLICATION

(11) **EP 4 718 295 A1**
(43) Date of publication of application: **01.04.2026**
(21) Application number: 25199074.3
(22) Date of filing: 29.08.2025
(51) Int. Cl.: G06F 21/44, G06F 21/57, H04L 9/32, H04L 9/00, H04L 9/40

(54) **APPARATUS, METHOD, AND SYSTEM FOR RESOURCE PROVIDER IDENTITY MANAGEMENT AND RESOURCE ATTESTATION AND PROVISIONING**

(30) Priority: 30.09.2024 US 202418902146
(71) Applicant: Nokia Solutions and Networks Oy, 02610 Espoo (FI)
(72) Inventor: BOSKOV, Novak, Freiberg am Neckar (DE); KHAN, Manzoor, New Providence, NJ (US); GUDAL, Aditya, Springfield, NJ (US); RIEMER, Joachim, Stuttgart (DE); SIENEL, Juergen, Leonberg (DE); WILLIAMS, Thomas, Columbus, OH (US); RAMANAN, Buvaneswari, Scotch Plains, NJ (US)
(74) Representative: Richardt Patentanwälte PartG mbB

(57) **Abstract**

An approach is provided for resource provider identity management and resource attestation and provisioning. The approach involves, for example, determining a request to initiate a pre-provisioning of a resource component to an infrastructure network (e.g., Decentralized Physical Infrastructure Networks (DePIN). The request includes a specification label that advertises one or more capabilities of the resource. The approach also involves reading of a specification table and a unique identifier from the resource component. The approach further involves verification of the specification label based, at least in part, on the specification table. The approach further involves generating a bundle based, at least in part, on the specification table and the unique identifier. The bundle represents the verification of the specification label. The approach further involves associating the bundle with the resource component.

## Description

### FIELD

The disclosed subject matter generally relates to infrastructure networks (e.g., with resource pools from various providers), resource attestation, digital identities, and protection against malicious attacks against such networks.

### BACKGROUND

An infrastructure network is a distributed system of system resources (e.g., hardware resources, compute resources, memory resources, etc.) managed and governed by multiple providers. One example of an infrastructure network includes but is not limited to a Decentralized Physical Infrastructure Networks (DePINs) that are distributed systems that leverage blockchain technology to manage and govern resources contributed by multiple providers. These networks enable users to access a diversified pool of hardware resources, such as computing power and storage, without being restricted to a single cloud provider. However, DePINs and other infrastructure networks face significant challenges related to security and trustworthiness, including the risks of malicious attacks on the operational and physical integrity of the networks. These issues arise from the decentralized nature of DePINs, where establishing reliable identity verification and attestation of hardware components becomes complex.

### SOME EXAMPLE EMBODIMENTS

Therefore, there is a need for robust mechanisms to ensure the authenticity of hardware and the integrity of provider identities, thereby safeguarding the network's reliability and efficiency.

According to one example embodiment, an apparatus comprises at least one processor, and at least one memory storing instructions that, when executed by the at least one processor, cause the apparatus at least to perform determining a request to initiate a pre-provisioning of a resource component to an infrastructure network. The request includes a specification label that advertises one or more capabilities of the resource. The apparatus is caused to also perform causing, at least in part, a reading of a specification table and a unique identifier from the resource component. The apparatus is caused to further perform causing, at least in part, a verification of the specification label based, at least in part, on the specification table. The apparatus is caused to further perform generating a bundle based, at least in part, on the specification table and the unique identifier. The bundle represents the verification of the specification label. The apparatus is caused to further perform associating the bundle with the resource component.

According to another aspect, the apparatus is caused to further perform determining another request to initiate a provisioning of the resource component to a resource pool of the infrastructure network, wherein the another request includes a proffered bundle associated with the resource component. The apparatus is caused to further perform determining the bundle associated with the resource component during the pre-provisioning. The apparatus is caused to further perform causing, at least in part, an addition of the resource component to the resource pool based, at least in part, on matching the proffered bundle to the bundle associated with the resource component during the pre-provisioning.

According to another aspect, the determining of the bundle comprises: (1) causing, at least in part, a reading of the bundle from a non-volatile memory of the resource component; or (2) causing, at least in part, another reading of the specification table and the unique identifier from the resource component to reconstruct the bundle.

According to another aspect, the generating of the bundle is further based, at least on part, on a verification that the resource component has not previously been provisioned in the infrastructure network by a provider associated with the request or another provider.

According to another aspect, the verification that the resource component has not previously been provisioned in the infrastructure network by the provider associated with the request or the another provider is based on determining that any prior provisioning of the resource component in the infrastructure network does not overlap in time.

According to another aspect, the apparatus is caused to further perform determining one or more identity attributes associated with a provider of the resource component. The apparatus is caused to further perform generating a participation credential for the provider based on a verification of the one or more identity attributes and based on the one or more identity attributes. The participation credential identifies the provider in one or more subsequent interactions in the infrastructure network.

According to another aspect, the one or more identity attributes is based on zero-knowledge proof of a possession of one or more identity documents.

According to another aspect, the apparatus is caused to further perform associating a reputation score to the participation credential of the provider based on the one or more subsequent interactions in the infrastructure network.

According to another aspect, the generating of the bundle is further based, at least in part, on the participation credential.

According to another aspect, the bundle is associated with the resource component by storing the bundle in a memory of the resource component.

According to another aspect, the infrastructure network is a Decentralized Physical Infrastructure Network (DePIN).

According to another example embodiment, a method comprises determining a request to initiate a pre-provisioning of a resource component to an infrastructure network. The request includes a specification label that advertises one or more capabilities of the resource. The method also comprises causing, at least in part, a reading of a specification table and a unique identifier from the resource component. The method further comprises causing, at least in part, a verification of the specification label based, at least in part, on the specification table. The method further comprises generating a bundle based, at least in part, on the specification table and the unique identifier. The bundle represents the verification of the specification label. The method further comprises associating the bundle with the resource component.

According to another example embodiment, a computer program comprising instructions which, when executed by an apparatus, cause the apparatus to perform determining a request to initiate a pre-provisioning of a resource component to an infrastructure network. The request includes a specification label that advertises one or more capabilities of the resource. The apparatus is caused to also perform causing, at least in part, a reading of a specification table and a unique identifier from the resource component. The apparatus is caused to further perform causing, at least in part, a verification of the specification label based, at least in part, on the specification table. The apparatus is caused to further perform generating a bundle based, at least in part, on the specification table and the unique identifier. The bundle represents the verification of the specification label. The apparatus is caused to further perform associating the bundle with the resource component.

According to another embodiment, a computer program comprises instructions for causing an apparatus to perform determining a request to initiate a pre-provisioning of a resource component to an infrastructure network. The request includes a specification label that advertises one or more capabilities of the resource component. The apparatus is caused to also perform causing, at least in part, a reading of a specification table and a unique identifier from the resource component. The apparatus is caused to further perform causing, at least in part, a verification of the specification label based, at least in part, on the specification table. The apparatus is caused to further perform generating a bundle based, at least in part, on the specification table and the unique identifier. The bundle represents the verification of the specification label. The apparatus is caused to further perform associating the bundle with the resource component. In another aspect of the example embodiment, the bundle also binds an identity of an owner of the resource with the resource component.

According to another example embodiment, a non-transitory computer-readable storage medium comprising program instructions that, when executed by an apparatus, cause the apparatus to perform determining a request to initiate a pre-provisioning of a resource component to an infrastructure network. The request includes a specification label that advertises one or more capabilities of the resource component. The apparatus is caused to also perform causing, at least in part, a reading of a specification table and a unique identifier from the resource component. The apparatus is caused to further perform causing, at least in part, a verification of the specification label based, at least in part, on the specification table. The apparatus is caused to further perform generating a bundle based, at least in part, on the specification table and the unique identifier. The bundle represents the verification of the specification label. The apparatus is caused to further perform associating the bundle with the resource component. In another aspect of the example embodiment, the bundle also binds an identity of an owner of the resource with the resource component.

According to another example embodiment, an apparatus comprises circuitry configured to perform determining a request to initiate a pre-provisioning of a resource component to an infrastructure network. The request includes a specification label that advertises one or more capabilities of the resource component. The circuitry is configured to also perform causing, at least in part, a reading of a specification table and a unique identifier from the resource component. The circuitry is also configured to further perform causing, at least in part, a verification of the specification label based, at least in part, on the specification table. The circuitry is configured to further perform generating a bundle based, at least in part, on the specification table and the unique identifier. The bundle represents the verification of the specification label. The circuitry is configured to further perform associating the bundle with the resource component. In another aspect of the example embodiment, the bundle also binds an identity of an owner of the resource with the resource component.

According to another example embodiment, a device comprises at least one processor; and at least one memory including a computer program code for one or more programs, the at least one memory and the computer program code configured to, with the at least one processor, cause the device to perform determining a request to initiate a pre-provisioning of a resource component to an infrastructure network. The request includes a specification label that advertises one or more capabilities of the resource component. The device is caused to also perform causing, at least in part, a reading of a specification table and a unique identifier from the resource component. The device is caused to further perform causing, at least in part, a verification of the specification label based, at least in part, on the specification table. The device is caused to further perform generating a bundle based, at least in part, on the specification table and the unique identifier. The bundle represents the verification of the specification label. The device is caused to further perform associating the bundle with the resource component. In another aspect of the example embodiment, the bundle also binds an identity of an owner of the resource with the resource component.

According to another example embodiment, an apparatus comprises means for determining a request to initiate a pre-provisioning of a resource component to an infrastructure network. The request includes a specification label that advertises one or more capabilities of the resource component. The apparatus also comprises means for causing, at least in part, a reading of a specification table and a unique identifier from the resource component. The apparatus further comprises means for causing, at least in part, a verification of the specification label based, at least in part, on the specification table. The apparatus further comprises means for generating a bundle based, at least in part, on the specification table and the unique identifier. The bundle represents the verification of the specification label. The apparatus further comprises means for associating the bundle with the resource component. In another aspect of the example embodiment, the bundle also binds an identity of an owner of the resource with the resource component.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing a method of the claims.

According to some aspects, there is provided the subject matter of the independent claims. Some further aspects are defined in the dependent claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

### BRIEF DESCRIPTION OF THE DRAWINGS

The example embodiments of the invention are illustrated by way of examples, and not by way of limitation, in the figures of the accompanying drawings:
FIG. 1 is a diagram of a system capable of providing resource provider identity management and resource attestation and provisioning, according to one example embodiment;
FIGs. 2A-2C are diagrams illustrating example attacks against an infrastructure network, according to various example embodiments;
FIG. 3 is a flowchart of a process for providing resource provider identity management and resource attestation and provisioning, according to one example embodiment;
FIG. 4 is a diagram of an identity protocol, according to one example embodiment;
FIG. 5 is a diagram of an attestation protocol, according to one example embodiment;
FIG. 6 is a diagram of a provisioning protocol, according to one example embodiment;
FIG. 7 is a diagram of an example user interface for providing resource provider identity management and resource attestation and provisioning, according to one example embodiment;
FIG. 8 is a diagram of hardware that can be used to implement example embodiments; and
FIG. 9 is a diagram of a chip set that can be used to implement example embodiments.

### DESCRIPTION OF SOME EMBODIMENTS

Examples of a method, apparatus, and computer program for providing resource provider identity management and resource attestation and provisioning, according to one example embodiment, are disclosed in the following. In the following description, for the purposes of explanation, numerous specific details and examples are set forth to provide a thorough understanding of the embodiments of the invention. It is apparent, however, to one skilled in the art that the embodiments of the invention may be practiced without these specific details or with an equivalent arrangement. In other instances, structures and devices are shown in block diagram form to avoid unnecessarily obscuring the embodiments of the invention.

Reference in this specification to "one embodiment", "one example embodiment", "an "embodiment", or "an example embodiment" means that a particular feature, structure, or characteristic described in connection with the embodiment is included in at least one embodiment of the present disclosure. The appearance of the phrase "in one embodiment" or "in one example embodiment" in various places in the specification are not necessarily all referring to the same example embodiment, nor are separate or alternative example embodiments mutually exclusive of other embodiments. In addition, the embodiments described herein are provided by example, and as such, "one embodiment" can also be used synonymously as "one example embodiment." Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

As used herein, "at least one of the following: <a list of two or more elements>," "at least one of <a list of two or more elements>," "<a list of two or more elements> or a combination thereof," and similar wording, where the list of two or more elements are joined by "and" or "or", mean at least any one of the elements, or at least any two or more of the elements, or at least all the elements.

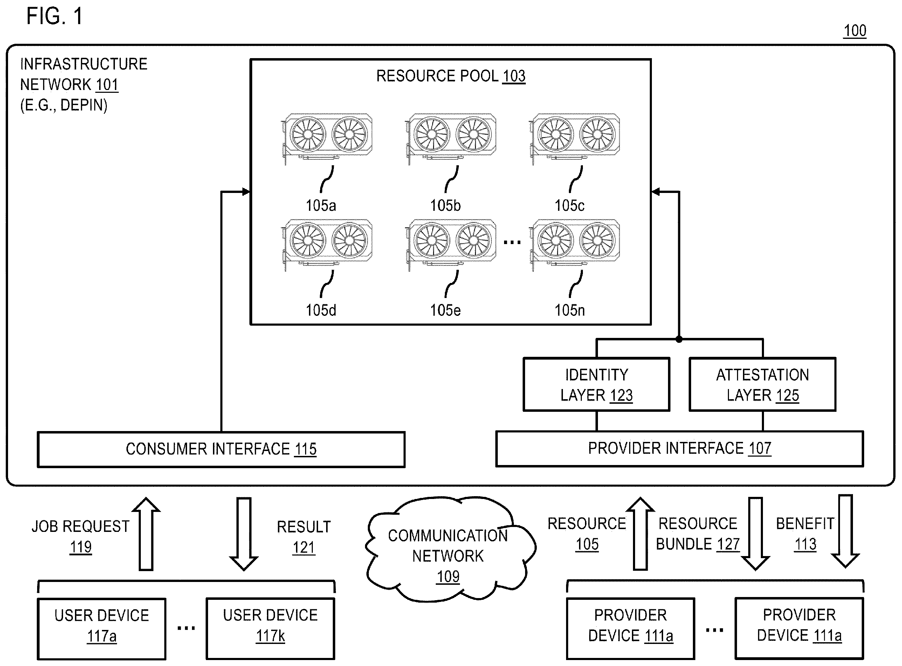

FIG. 1 is a diagram of a system 100 capable of providing resource provider identity management and resource attestation and provisioning, according to one example embodiment. As used herein, an infrastructure network 101 refers to a system architecture comprising a resource pool 103 comprising one or more resource components 105a-105n (also collectively referred to as resource components 105). By way of example, resource components 105 in the infrastructure network 101 can include a wide variety of resources available within the system 100. These encompass, but are not limited to: (1) hardware resources (such as graphics processing units (GPUs), neural processing units (NPUs), central processing units (CPUs), etc. as well as servers, networking equipment, virtual machines, etc.); (2) software resources like applications and services; (3) memory resources for data storage; (4) bandwidth resources for data transmission; and/or the like. This diverse collection of resources ensures robust and flexible provisioning capabilities within the infrastructure network 101.

In one embodiment, the resource pool 103 of the infrastructure network 101 represent the combined or pooled resource components 105 of one or more resource providers that interact with the infrastructure network 101 via a provider interface 107 over a communication network 109 using one or more provider devices 111a-111m (also collectively referred to as provider devices 111). In one embodiment, resource providers in the infrastructure network 101 can be diverse and include a variety of entities. Examples of resource providers include but are not limited to:
- Individual Hardware Owners: These are individuals who own resource components 105, such as GPUs, CPUs, NPUs, storage devices, etc., and contribute them to the infrastructure network 101.
- Coalitions of Individual Hardware Owners: Groups of individuals who pool their resource components 105 together to provide a larger, more robust set of hardware/resources to the infrastructure network 101.
- Private Cloud Operators (Companies): These are companies that operate private clouds and offer their resource components 105 to the infrastructure network 101, enhancing the available computational power, storage, etc..
- Public Cloud Providers: These providers generally include major cloud service providers that contribute their infrastructure to the infrastructure network 101, allowing for expansive scalability and resource availability.

These providers interact with the infrastructure network 101 through various interfaces and devices, ensuring a seamless integration and efficient resource management within the system 100. By decentralizing resource provision, the network benefits from a wide array of hardware sources, enhancing its robustness and flexibility. Decentralizing, for instance, refers to the distribution of authority, resources, and decision-making processes from a central entity to multiple autonomous entities within the system 100 (e.g., to multiple participating providers). In the context of the decentralized infrastructure network 101, this means that instead of relying on a single, central cloud provider for hardware resources or other resource components, the network utilizes resources contributed by various providers. In one embodiment, the provider devices 111 provision respective resource components 105 of respective providers to the infrastructure network 101 in return for one or more benefits (e.g., monetary benefits, reputation, credits, etc.).

In one embodiment, the infrastructure network 101 and its resource pool 103 are made available to end users/consumers via a consumer interface 115 using user devices 117a-117k (also collectively referred to as user devices 117). For example, user devices 117 can submit job requests 119 to the infrastructure network 101. One or more resource components 105 of the resource pool 103 can then be used or otherwise allocated to perform the submitted job requests 119 to generate corresponding results 121 (e.g., the results on requested compute tasks). The results 121 are then provided via the consumer interface 115 to the requesting user device 117.

By way of example, in one embodiment, the infrastructure network 101 can be a Decentralized Physical Infrastructure Network (DePIN). DePINs, for instance, are distributed systems of hardware resources (e.g., resource components 105) governed through blockchains. Instead of constraining users to the hardware resources of a single cloud provider, DePINs allow users to utilize the resources of all hardware providers connected to the infrastructure network 101. As previously described, these hardware providers can be individual hardware owners, coalitions of individual hardware owners, private cloud operators (companies), and even public cloud providers. The governance of the system is decentralized to all, or a subset of all participants including both hardware providers and users. The governance is typically implemented through blockchain smart contracts such that no party needs to trust any other single party a priori. Instead, each party can verify the actions taken by the system 100, under reasonable assumptions (e.g., less than one-third of the entire system is controlled by an attacker). As a convenience, the payments are often also conducted on the blockchain, and the price formation is typically dynamic to balance supply and demand. It is noted that the various embodiments described herein use term DePIN "tenants" to jointly denote users (consumers) and providers. Note that one real-world entity can at the same time play both the role of a user and a provider. The structure of an example infrastructure network 101 (e.g., a DePIN) is illustrated in FIG. 1.

The following terms are referred to when discussing the technical context of the various embodiments described herein: (1) hardware/resource attestation; (2) digital identity; (3) reputation systems; (4) Sybil attacks; and (5) blockchain. These terms are described in more detail as follows.

Hardware/resource attestation is the process of verifying the authenticity of hardware or other resource components 105. When a new hardware component 105 is introduced to the system 100, the system operator can verify it has the advertised capabilities. Note that this is not the same as making sure that the hardware component is functional. A hardware component 105 may be functional yet non-authentic. The process of hardware attestation is less challenging in centralized systems where the resource providers are typically entities with contractual relations with the provider of the infrastructure network 101. The attestation can then be simplified relying on the trust established through said contractual relation. However, in decentralized systems, hardware attestation is a more challenging problem as it is impractical to establish contractual relations with all possible providers. Furthermore, due to the financial aspects of the system, the providers may have incentives to manipulate the demand and supply to maximize their immediate profit.

Digital Identity refers to the concept of customer identity on the Internet. In traditional systems, the customer creates their profile and uses it as their identity within the platform. Various protocols have been developed to allow for identity sharing between the identity providers and other enabled services. The family of these protocols is colloquially known as "log in with" solutions. Using "log in with" solutions, the users can authorize other enabled services to ask their identity provider about the aspects of their identity (e.g., a customer's real-world name, date of birth, etc.). Note that any third-party service that wants to allow their customers to "log in with" traditional identity providers must trust the identity provider. The users themselves cannot prove their own identity without the direct and real-time participation of the identity provider. This is vastly inefficient in decentralized systems. For decentralized systems, an alternative digital identity framework has been developed based on the standards such as but not limited to "DID Core" and "VC Data Model" W3C standards and/or equivalent.

Reputation systems help establish trust relations between users on the Internet by binding their digital identities to a reputation score. The other participants in the system can then make decisions on trusting each other based on the attached scores. Ideally, the scores reflect the behavior of the participants. The participants who align their behavior with the overall objectives of the system should have higher trust/reputation scores.

Sybil attacks exploit the deficiencies of digital identity to defy reputation systems. As the attacker may create as many digital identities as they want, any effect of accruing a negative reputation can be nullified by abandoning the identity and adopting a new one with a neutral reputation. Switching identities may not benefit the honest participants with good reputations, but certainly benefits the dishonest ones.

Blockchain is a distributed ledger technology (DLT) that ensures an unalterable history of records even under hostile conditions when a minority of participants are malicious. Advanced blockchains allow for the execution of programs called "smart contracts," which can enforce inter-user policies without a priori trust relation between them (i.e., without previously established contractual relation). DePINs use blockchains to establish governance of the system where no parties trust each other a priori, or may have conflicting interests (e.g., company competition).

By way of example, infrastructure networks 101 (such as DePINs) can be used for a variety of applications. One of the most prominent DePINs that allows users to rent GPUs for AI purposes is the Akash Network. The provider's side of the Akash network is implemented as the Akash provider daemon that cooperates with Kubernetes orchestration software. As the Akash daemon is fully operated by the providers, the Akash Network is prone to the various malicious attacks (e.g., denial of service (DoS, Sybil, and "price manipulation attacks" that are described in more detail in the following section).

Other DePINs with similar architecture include Render Network, which besides AI/ML workloads also targets on-demand computer graphics rendering, and DeepBrainChain which focuses primarily on AI/ML workloads. The attacks and mitigations presented herein apply to most DePINs. In addition, although the various embodiments described herein refer to DePINs as examples of infrastructure networks 101, it is contemplated that any type of infrastructure network 101 (e.g., a network that provides resource pools 103 of resource components 105 for use across a variety of job requests or tasks) are applicable herein.

Another example of a technical environment that can benefit from resource pooling the identity management and resource attestation approach described herein include 6^{th} generation (6G) communication networks. 6G communication networks introduces a shift in wireless communication, offering ultra-high-speed data transfer, ultra-low latency, and massive connectivity to support a wide array of applications such as autonomous systems, augmented and virtual reality (AR/VR), and massive Internet of Things (mIoT). As the demands on network capacity, coverage, and performance continue to escalate, efficient management and utilization of network resources are increasingly important.

The 6G architecture, which is expected to support diverse applications with varying performance requirements (e.g., ultra-reliable low-latency communications (URLLC), enhanced mobile broadband (eMBB), and massive machine-type communications (mMTC)), requires a more flexible, scalable, and efficient method of resource management. Resource pooling represents one innovation in addressing these challenges. It involves the aggregation and dynamic allocation of various network resources across multiple domains, including spectrum, computing, storage, and energy. By pooling resources, the 6G network can improve overall resource utilization, reduce operational costs, and ensure that network performance meets the stringent requirements of next-generation applications.

Spectrum pooling, for example, facilitates dynamic spectrum sharing across different services and operators, improving spectral efficiency and minimizing interference. In parallel, computing and storage resources can be pooled at the edge and in cloud infrastructures to provide real-time data processing capabilities, thereby reducing latency for time-sensitive applications. Moreover, energy resources can be pooled and distributed intelligently across network nodes to optimize power consumption, addressing the sustainability goals of 6G networks.

Further, network virtualization techniques, such as network slicing, enable the partitioning of shared physical resources into multiple virtual networks tailored for specific use cases. This dynamic slicing of resources is fundamental to the agility and flexibility required in 6G environments, allowing for the efficient handling of diverse applications with distinct service level agreements (SLAs).

In light of the foregoing, there exists a need for an advanced resource pooling mechanism that enables provider identity management and resource attestation as discussed in the various embodiments described herein. the seamless integration and management of these various resources in a 6G communication network.

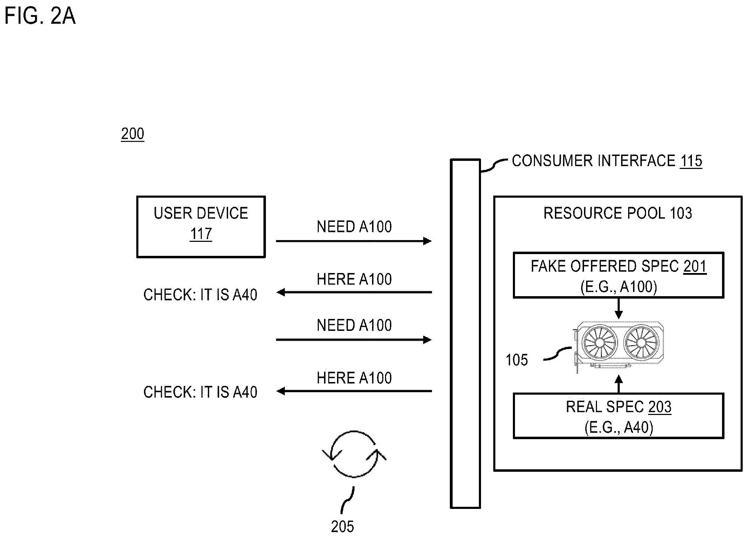

Current infrastructure networks 101 (e.g., DePINs) are prone to at least three significant kinds of attacks: (1) DoS, price manipulation attacks, and Sybill attacks. FIGs. 2A-2C are diagrams illustrating example attacks against an infrastructure network, according to various example embodiments.

More specifically, FIG. 2A illustrates an example DoS attack 200, according to one embodiment. When a provider wants to make a user (e.g., user device 117) falsely believe that there is the resource component 105 that they need in the shared resource pool 103, they can run a DoS attack. The provider provides the resource component 105 with specification X (e.g., a GPU model A40) but advertises it as resource Y (e.g., a GPU model A100, where X ≠ Y. The user can easily learn that X ≠ Y once they have acquired the resource (e.g., by running a test), but not before that. As shown, the user device 117 requests a GPU model A100 via the consumer interface 115 and receives what is purported to be a GPU resource component 105 that is model A100. On receiving access to the resource component 105, the user device 117 can run a check (e.g., by interrogating the hardware/resource component 105 for its specifications) and determines that the provided resource component 105 is in fact a model A40 instead of the requested model A100. However, since the current/traditional DePINs are not "Sybil resistant" and do not have a resilient reputation system, there is not much that the user can do to prevent this situation from repeating. Therefore, the attacker can repeatedly offer the false resource (e.g., advertised a fake offered specification 201 (e.g., model A100) while the real specification 203 is different (e.g., model A40)) and force the user into an endless loop of acquiring the false resource. This is depicted as attack loop 205 in FIG. 2A.

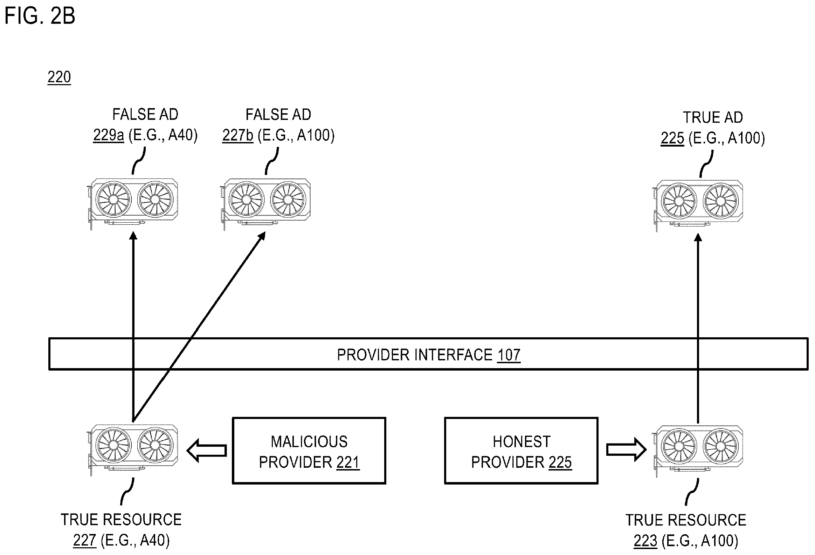

FIG. 2B illustrates an example of a price manipulation attack 220, according to one embodiment. When a malicious provider 221 wants to deflate the value of the resource (e.g., true resource 223 (GPU model A100) that is in abundance with their competition (e.g., honest provider 225) or inflate the value of the resource (e.g., true resource 227 (GPU model A40)) they have in abundance, the attacker (e.g., malicious provider 221) can conduct what is refer to herein as "price manipulation attacks." When the attacker (e.g., malicious provider 221) wants to deflate the price of the resource held by the competition (e.g.., true resource 223), the attacker (e.g., malicious provider 221) first collects the information about the resource 223 that their competition often advertises (e.g., GPU model A100), then constructs many false advertisements 229a-229b for that same resource (e.g., GPU model A100). Since now the resource (e.g., GPU model A100) seems to be in abundance in the shared pool, its price drops and the competition (e.g., honest provider 225) loses its competitive advantage. As opposed to the DoS attack described above where the malicious provider attacks the user, here the malicious provider 221 attacks the honest provider 225. We depict this attack in FIG. 2B.

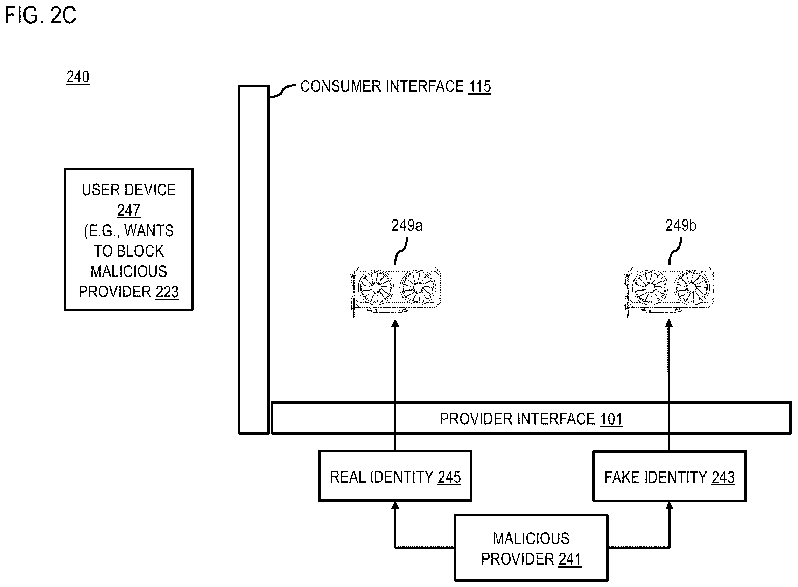

FIG. 2C illustrates an example of a Sybil attack 240, according to one embodiment. In so-called Sybil attacks, a malicious provider 241 creates a fake identity 243 (e.g., via provider interface 107) to hide the history of their past malicious behavior. In this example, it is assumed that the malicious provider 241 has previously proved themselves an unreliable partner under their real identity 245. The user can then decide not to get into any future arrangements with the malicious provider 241. However, this is not easy to do when the malicious provider 241 can very easily create alternative identities (e.g., fake identity 243). All these alternative identities (e.g., fake identity 243) are indistinguishable from each other from the perspective of reliability until the user (e.g., via user device 247) decides to use their service (e.g., use their resource component 249a or 249b) via consumer interface 115. It is only then that the user can discover whether they are reliable or not. Therefore, DePINs need "Sybil resistance:" a mechanism to bind providers to their identities to stop the malicious ones.

The threat of these attacks (or other equivalent attacks) is further exacerbated by fierce competition between the tenants of DePINs or infrastructure networks 101. Companies have a high incentive to utilize more computing resources but also want to keep their competition at bay by denying them access to the shared resource pool 103.

To address these technical challenges, the system 100 of FIG. 1 introduces a capability to secure DePINs or other equivalent infrastructure networks 101 by focusing on the defenses against such attacks (e.g., DoS, Sybil, Price Manipulation attacks, and/or other equivalent attacks). In one embodiment, the infrastructure network 101 is divided into two main structural blocks called "layers" (e.g., an identity layer 123 and attestation layer 125) and seamlessly integrates with the existing infrastructure networks 101 (e.g., DePINs) on the level of APIs (Application Programming Interface) or equivalent. As depicted in FIG. 1, in one embodiment, the identity layer 123 and attestation layer 125 sit on top of the provider interface 107.

In one embodiment, the identity layer 123 and/or attestation layer 125 (alone or in combination) mitigate the risk of network attacks (e.g., DoS, Sybil, and Price Manipulation attacks) by ensuring: (1) identity verification for providers, (2) attestation of resource components 105, and/or (3) binding of the provider's identity with the identity of the resource components 105 they provide. In one embodiment, the identity layer 123 and attestation layer 125 can operate alone or in combination. In other words, resource attestation (e.g., identifying and verifying the actual capabilities of the resource component 105 against the capabilities of the resource component 105 advertised in the infrastructure network 101 by the resource owner) can work alone or in combination with the verification of the resource provider's identity.

With respect to identity verification, in one embodiment, each resource provider can bind themselves to an identity before providing the resource that they want to add to the infrastructure network 101. For example, identification verification can bind the identity of the resource provider with the corresponding resource component 105 as part of the resource bundle 127 generated by the system 100 to represent the results of the identity and/or resource attestation protocols discussed in the various embodiments described herein. In some embodiments, the resource bundle 127 can be signed. A signed resource bundle 127 means that the identity of the resource provider and/or specifications of the resource component 105 have been verified and authenticated by the system 100, ensuring its legitimacy. This cryptographic signature binds the provider's identity and/or resource attestation results to the resource component 105, preventing tampering and enhancing trust within the network. This identity binding enables an effective reputation systems, which mitigate the risks of Sybil attacks. Any dishonest or detrimental behavior of a provider can now be recorded as a penalty in a reputation system exposed to the users before requesting resource components 105. The users can determine their minimal acceptable provider's reputation and discard all potential providers that do not meet the criteria.

Note that a malicious provider can still attempt to generate fake identities. However, in one embodiment, the attack can be thwarted by the reputation system which will assign a minimal neutral reputation to the fake identity. Further detrimental behavior of the newly created fake identity will hurt the attacker even further by reducing the reputation of the fake identity, therefore minimizing the monetization potential of their resource. The binding between the identity of the provider and the identity of the hardware resource, which is described in more detail below, can further demotivate the attacker by "marking" the hardware component involved in the attack as such.

With respect to attestation of resource components, due to decentralization, resource providers can assign arbitrary specification labels to their hardware units. Instead of trusting these specification labels, the provider interface 107 (e.g., via the attestation layer 125) can verify the label before accepting the resource to its pool (e.g., by generating and providing a resource bundle 127 to the corresponding provider). In one embodiment, the various embodiments described herein include a protocol between providers and the provider interface 107 which allows for verification of the specification labels. The attestation protocol, for instance, makes use of routines referred to as "specification discovery." Specification discovery refers to compact standardized programs that read the vendor's specification table (e.g., often unalterable) stored on a resource component 105 (e.g., hardware unit) to verify its specifications. For most hardware platforms of interest for infrastructure networks 101 (e.g., DePINs), these programs can be executed by the provider interface 107 (e.g., via the attestation layer 125) with the consent of the provider.

In practice, most specification discovery procedures are relatively compact standardized programs that read the unalterable vendor's specification table stored on the hardware unit. The source code of these programs is often public, and since the provider interface 107 can communicate with the hardware component from a Trusted Execution Environment (TEE) such as Intel SGX4 or AMD TrustZone5, the platform that executes the provider interface 107 itself need not be trusted.

In one embodiment, the system 100 can provide for a permanent bond between the provider's identity and the identity of the hardware resource they provide. For example, the provider can sign a form of "ownership certificate" for each hardware component that they provision and want to add to the resource pool 103 of the infrastructure network 101. By way of example, the "ownership certificate" can be represented by the resource bundle 127 (e.g., signed bundle). The ownership certificate or resource bundle 127, for instance, can be stored in the resource component 105's permanent/non-volatile memory and/or securely recorded on the blockchain. This prevents a malicious provider from (1) denying that they have provisioned a particular hardware component, and (2) claiming that they have provisioned a hardware component that they did not.

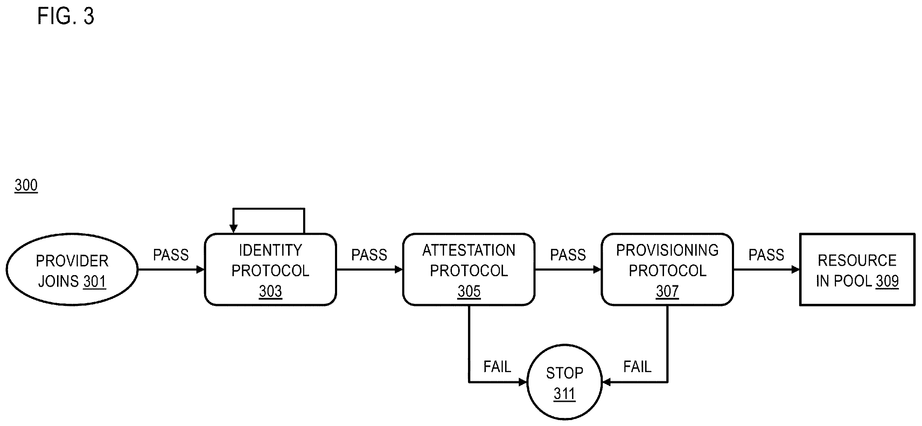

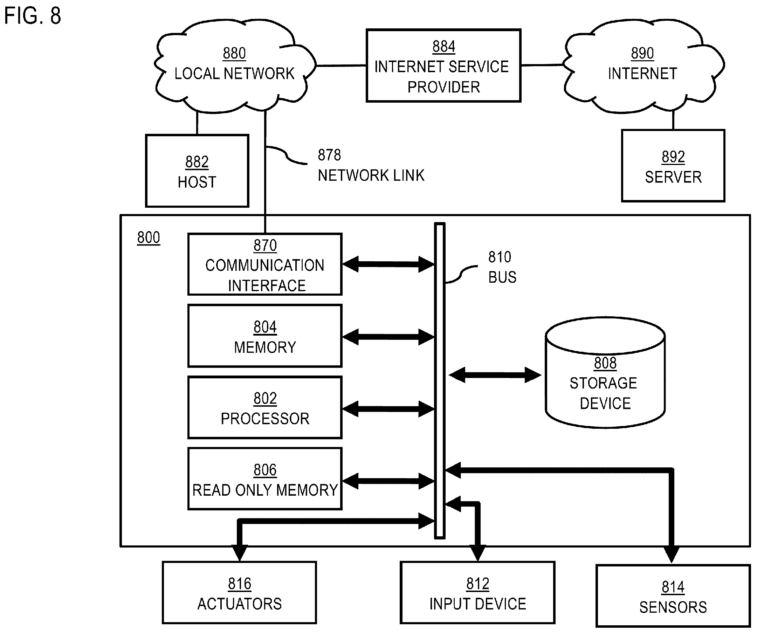

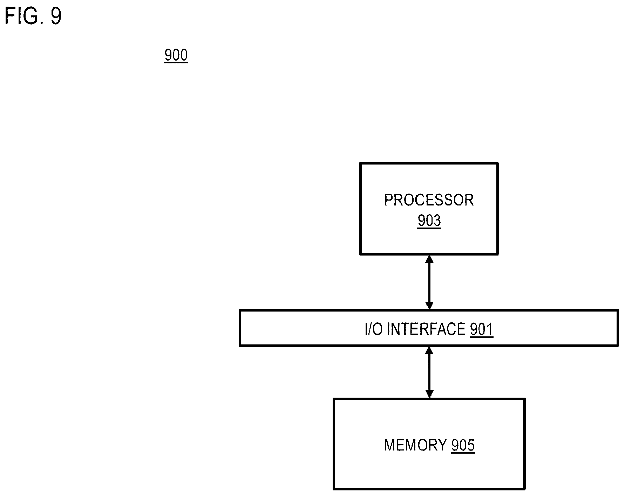

FIG. 3 is a flowchart of a process 300 for providing resource provider identity management and resource attestation and provisioning, according to one example embodiment. In one example, the training coach infrastructure network 101 and/or any of its components/circuitry (e.g., identity layer 123, attestation layer 125, etc.) may perform one or more portions of a process 300 and may be implemented in/by various means, for instance, one or more chip sets including a processor and a memory as shown in FIGs. 8 or 9 or in a circuitry, hardware, firmware, software, or in any combination thereof. In one example embodiment, the circuitry includes but is not limited to any component discussed with respect to FIG. 1. As such, the infrastructure network 101, identity layer 123, attestation layer 125, and/or any associated component, apparatus, device, circuitry, system, computer program product, method, and/or non-transitory computer readable medium, or any combination thereof, can provide means for accomplishing various parts of the process 300, as well as means for accomplishing embodiments of other processes described herein. Although the process 300 is illustrated and described as a sequence of steps, it is contemplated that various embodiments of the process 300 may be performed in any order or combination and need not include all of the illustrated steps.

In step 301, one or more providers (e.g., using provider device 111) can join the infrastructure network 101, for instance, using the provider interface 107. In one embodiment, joining the infrastructure network 101 involves registering (e.g., by creating an account and/or presenting requested identity attributes/documents). For example, joining a DePIN enables a provider to contribute resources components 105 (e.g., physical/logical/virtual assets, such as devices, sensors, compute nodes, etc.) to a blockchain-based network that operates without centralized control. Participants share resource components 105, like bandwidth, storage, or processing power, and receive compensation in the form of tokens or incentives (e.g., benefits 111). By joining a DePIN or any other equivalent infrastructure network 101, individuals or organizations support a decentralized, community-driven infrastructure, fostering more resilient and transparent services such as cloud computing (e.g., for AI tasks, rendering tasks, etc.), wireless communications, IoT data aggregation, etc. This model promotes efficient resource usage and enables participants to monetize their contributions.

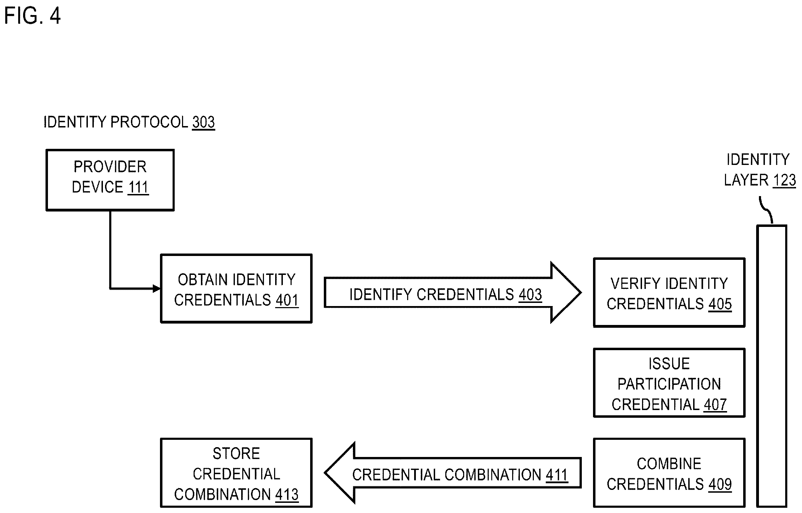

After the joining step 301, in one embodiment, the process 300 further specifies three sub-protocols (e.g., identity protocol 303, attestation protocol 305, and provisioning protocol 307) that implement the three properties we outlined above. Although the three sub-protocols are illustrated in FIG. 3 as part of a single pipeline, it is contemplated that each sub-protocol can be implemented alone or in combination with any other sub-protocol. In summary, the system 100 denote these three sub-protocols as the identity protocol 303, the attestation protocol 305, and the provisioning protocol 307, and arrange them into a pipeline outlined in FIG. 1. Each of the sub-protocols are further illustrated in more detail with respect to FIGs. 4-6 below.

FIG. 4 is a diagram of the identity protocol 303, according to one example embodiment. The goal of the Identity protocol 303, for instance, is to prove the provider's identity. This will later allow the system 100 to bind the provider's identity to the identity of the resource component 105 (e.g., hardware resource) contributed by the provider to mitigate the above-mentioned attacks. In one embodiment, the infrastructure network 101 conducts the identity protocol 303 between the provider and the identity layer 123 on top of the provider interface 107. Being a "layer on top of an interface" refers to a system, protocol, or application that operates above and relies on the lower-level provider interface 107, typically abstracting the complexities of the underlying operations of interacting with provider devices 111. The provider interface 107 provides a defined set of functionalities or services that the identity layer 123 can use without needing to understand or manage the inner workings of the underlying system. In this context, the higher layer (e.g., identity layer 123) interacts with the provider interface 107 to perform its tasks associated the identify protocol 303, while the provider interface 107 serves as a bridge between the identify layer 123, the foundational systems or hardware of the infrastructure network 101, and the provider devices 111. This layering helps modularize design, improve flexibility, and make the system easier to manage and evolve, as changes to the underlying system can often occur without disrupting the identity layer 123.

In the identity protocol 303 of FIG. 4, before entering the identity protocol 303, the provider (e.g., via provider device 111) and Identity Layer 123 can establish a secure encrypted connection. By way of example, they can establish this connection using a standard secure channel communication technology such as but not limited to TLS (Transport Layer Security) or any equivalent technology. In the step 401 of the identity protocol 303, the provider device 111 introduces itself using the identity (e.g., via identify credentials process 403) requested by the identity layer 123. In one embodiment, the kind of identity attributes (e.g., obtained via process 401) that the provider device 111 presents should be public and known to the provider. By way of example, an identity attribute is a specific piece of information that defines or describes an aspect of a provider's identity. These attributes are used to uniquely identify, verify, or authenticate the provider within the infrastructure network 101. Different infrastructure networks or DePINs may require different identity attributes or multiple networks/DePINs may form a coalition and share their identity layer 123 to mitigate cross-network (e.g., cross-DePIN) attacks. Thus, the identity layer 123 determines one or more identity attributes associated with a provider of the resource component 105.

In one embodiment, the identity attributes are "virtually unalterable," meaning that they must be hard for the provider to forge. An example implementation includes but is not limited to using a Zero-Knowledge Proof (ZKP) of possession of one or more identity documents (e.g., passport, driver's license, or other identity document issued by a governmental/regulatory body) as an identity attribute of the provider. Note that this can be enabled by the "VC Data Model" W3C standard and does not require the provider to reveal their passport or other identity document. The provider can just present a zero-knowledge proof generated according to one of the mechanisms outlined in the W3C standard. As used herein, a zero-knowledge proof of identity is a cryptographic method that allows one party (the provider) to prove to another party (the identity layer 123) that they possess certain information related to their identity without revealing the actual information itself. This process ensures that sensitive details-such as passwords, biometric data, or other identity attributes-remain private, while still confirming the provider's identity. In the context of identity, the prover demonstrates that they know or own an attribute (like a government-issued ID, a private key, or a password) without disclosing any specific details about the attribute. For instance, a user could prove they possess an identity document without revealing details of the document.

In the next step 405, the identity layer 123 verifies the identity attributes of the provider using the procedures such as but not limited to the above-mentioned W3C standards. For example, the World Wide Web Consortium (W3C) has developed a set of standards aimed at enabling more secure, decentralized, and privacy-respecting identity verification methods. These standards focus on two key components: Verifiable Credentials (VCs) and Decentralized Identifiers (DIDs).

Verifiable Credentials (VCs) are digital credentials that represent identity information about an individual, organization, or entity (e.g., the provider). VCs are cryptographically secure and can be verified by any party without relying on centralized databases. Issuers, such as governments or institutions, can issue VCs that the holder controls and presents to verifiers as needed. This allows the credential holder to prove aspects of their identity, such as age, qualifications, or membership, without revealing unnecessary details or exposing the underlying data to intermediaries.

In parallel, Decentralized Identifiers (DIDs) (e.g., the identity layer 123) provide a self-sovereign and decentralized way of establishing and verifying identity. DIDs are not tied to a centralized authority, allowing users to create and control their own identifiers, which are securely stored on decentralized systems like blockchains. DIDs are resolved through DID documents that contain cryptographic keys and other metadata necessary for authentication. This decentralization eliminates the need for centralized control and provides users with greater privacy and security in managing their identities.

At step 407, following identity verification, the identity layer 123 issues a "participation credential" which witnesses the verification process has succeeded (e.g., pass on identity verification). The identity layer 123 then cryptographically combines the provider's attributes with the generated participation credential (at step 409) and returns it to the provider for them to present it in subsequent interactions (at step 411). In one embodiment, the "participation credential" comprises the signed resource bundle 127. At step 413, the provider can store the credential combination (e.g., signed resource bundle 127 binding the verified identify of the resource provider with the resource component 105) for subsequent use. An example implementation includes but is not limited to using cryptographic signatures such as Rivest-Shamir-Adleman (RSA) (Rivest, Shamir, & Adleman, 1978) to sign the combination of the provider's attributes and the participation credential.

In summary, a credential combination 411 (e.g., signed resource bundle 127) can be a structured digital artifact that encapsulates both the credential and specific attributes that describe or verify a provider's identity. The identity layer 124 generates a participation credential for the provider based on a verification of the one or more identity attributes and based on the one or more identity attributes by binding the identity attributes to a verifiable credential. In one embodiment, the credential combination 411 (e.g., participation credential) identifies the provider in one or more subsequent interactions in the infrastructure network 101.

In one embodiment, the identity layer 123 can enhance the participation credential of the provider by associating a reputation score based on the provider's subsequent interactions within the infrastructure network 101. This reputation score adds an additional layer of trust and accountability, ensuring that providers are incentivized to maintain a positive standing in the network.

First, the identity layer 123 continuously monitors the provider's interactions and activities within the infrastructure network 101. These interactions may include, but are not limited to, resource sharing contributions, compliance with network protocols, timely response to service requests, and overall reliability and quality of service provided. Data pertaining to the provider's interactions is aggregated and analyzed. This could include metrics such as bandwidth usage, uptime, response times, successful task completions, and feedback from other network participants, ensuring a comprehensive view of the provider's performance and behavior over time.

The identity layer 123 then employs a scoring algorithm to calculate the reputation score based on the aggregated data. This algorithm considers various factors such as performance metrics (quantitative measures of the provider's resource contributions and service efficiency), compliance (adherence to network protocols and standards), reliability (consistency and dependability of the provider's resources), and feedback (ratings and reviews from other network participants). The scoring algorithm can weigh these factors differently based on their importance to the overall network performance and reliability.

Once calculated, the reputation score is cryptographically associated with the provider's participation credential and/or resource bundle 127 using techniques such as but not limited to digital signatures or hash functions to ensure the integrity and authenticity of the score. The updated participation credential, now containing the reputation score, is issued to the provider. The reputation score is dynamic and adjusts based on ongoing interactions and updated performance metrics. The identity layer 123 periodically reassesses the provider's activities and recalculates the reputation score to reflect any changes in performance or behavior. This reputation score influences the provider's standing and opportunities within the network. Higher scores may grant access to premium tasks, better compensation, and preferential treatment in resource allocation, while lower scores may limit opportunities and prompt corrective actions.

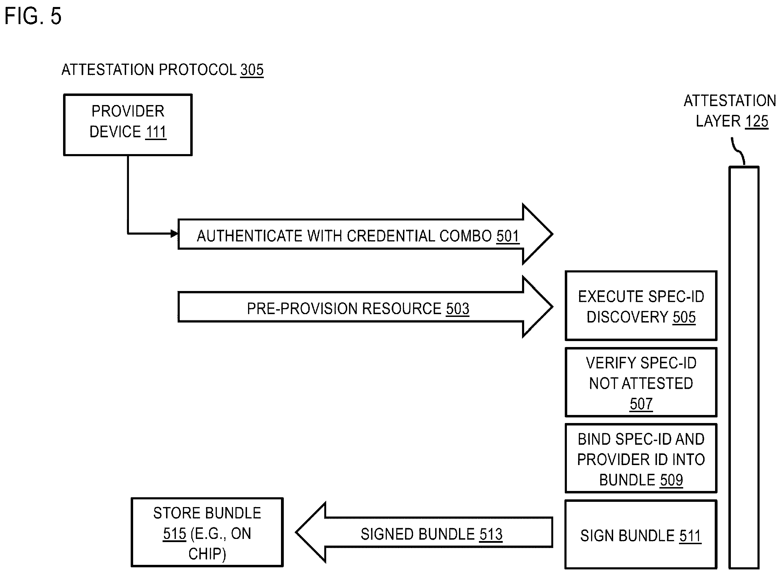

FIG. 5 is a diagram of the attestation protocol 305, according to one example embodiment. In one embodiment, the attestation protocol 305 can be used alone or in combination with the identity protocol 303 and/or provisioning protocol 307. By way of example, a provider enters the attestation protocol 305 for at least one of their resource components 105 (e.g., hardware units) that are to be added to the resource pool 103 of the infrastructure network 101. The purpose of the attestation protocol 305 is to verify the authenticity of the resource component 105 (e.g., hardware unit) and cryptographically bind it to the provider who owns it. In one embodiment, the same resource component 105 (e.g., hardware unit) cannot be provisioned multiple times, and one resource component 105 (e.g., hardware unit) cannot be provisioned by two different providers at the same time. The condition against two different providers provisioning the same resource, for instance, can be used to protect against price manipulation and Sybil attacks.

In the first step 501, the provider (e.g., via provider device 111) authenticates to the attestation layer 125 using, for instance, the signed credential combination 411 (e.g., signed resource bundle 127) obtained in the identity protocol 303 (or any other equivalent authentication credential). For example, authentication of the provider can include but is not limited to verifying credentials provided by the requesting provider against the credentials/identity of the resource provider bound to the signed resource bundle 127. If there is a mismatch, it indicates potential fraudulent activity. This comparison ensures that only authorized providers, whose identities have been verified and cryptographically bound to the resource bundle, can provision their resource components 105 into the infrastructure network 101.

The provider device 111 then allows the attestation layer 125 (via a corresponding agent) to connect to their resource component 105 (e.g., hardware unit) in a process referred to herein as "pre-provisioning" (step 503). In other words, the attestation layer 125 determines a request (e.g., from the provider device 111) to initiate a pre-provisioning of a resource component 105 to an infrastructure network 101. One example implementation of the pre-provisioning procedure includes but is not limited to opening a secure shell between the provider device 111 (e.g., provider's computer) and an attestation agent from the attestation layer 125. As used herein, the attestation agent can be a software module of the attestation layer 125 programmed to perform one or more functions of the attestation protocol 305. Subsequently, at step 505, the attestation agent executes a procedure referred to as "spec-id discovery," where it obtains the information about the hardware unit specification. This is typically a procedure that reads an unalterable detail table embedded in the device by the vendor. The detail table, for instance, is a data structure that contains various tables and fields, providing information about the hardware configuration and/or performance capabilities of a resource component 105. The detail table can define tables or fields for providing capability registers, device attributes, and specification.

For instance, resource components 105 such as GPUs store such information in VBIOS (video BIOS), firmware, non-volatile memory, unalterable memory, and/or the like. A significant field read from the GPU in this phase is the UUID (Universally Unique Identifier) of the GPU unit. For resource components 105 more generally, this identifier field can be any unique identifier of the resource component 105. Accordingly, the attestation layer 125 or its agent can cause, at least in part, a reading of a specification table and a unique identifier from the resource component 105. Causing the reading can comprise sending instructions, signals, programs, etc. to the agent or other equivalent software/hardware/circuitry of the attestation layer 125 to perform the reading of the data from memory of the resource component 105. The data read from the resource component can further include but is not limited to: (1) core specifications such as but not limited to: component model and manufacturer; component architecture (e.g., GPU architecture); core clock speed; memory specifications; thermal and power limits; etc.; (2) capabilities and features such as but not limited to: CUDA cores or stream processors; supported APIs; hardware features; etc.; (3) PCIe configuration such as but not limited to: bus interface; bandwidth limits; etc.; (4) firmware and driver information such as but not limited to: firmware version; driver requirements; etc.; (5) identification registers such as but not limited to: unique identifiers assigned to the component; vendor identifier; subsystem identifiers; etc. Although the various embodiments refer to a "specification table", in some embodiments, the specification table can be a single data value or data field read from the resource component 105 and can be any data size and/or data format.

In the next step 507, the attestation agent verifies that the resource component 105 or hardware unit (represented by its ID) has not been provisioned by someone else, or by the same provider (e.g., provider requesting addition of the resource component 105 to the resource pool 103). The former would indicate the provider has gained access to someone else's hardware unit, while the latter would indicate a Sybil attack. One legitimate use of the same hardware unit by multiple different providers is when someone sells their resource component 105 or hardware unit. The attestation layer 125 can handle this situation in the following way:

The attestation layer 125 is configured to assume that this kind of provisioning should happen at different times such that there is no time when the same resource component 105 or hardware unit is provisioned by multiple different providers in the infrastructure network 101. In other words, the verification that the resource component has not previously been provisioned in the infrastructure network by the provider associated with the request or another provider is based on determining that any prior or current provisioning of the resource component 105 in the infrastructure network 101 does not overlap in time (e.g., to prevent price manipulation and Sybil attacks). The resource component 105 or hardware unit itself does not inherit any credibility or reputation from its previous owner. Each owner's identity is considered separate and responsible for their behavior within the system.

In one embodiment, the request for pre-provisioning a resource component 105 can include a specification label that advertises one or more capabilities of the resource. By way of example, a specification label for a resource component 105 is created by the provider to advertise the capabilities of the component within the infrastructure network 101. This label includes details such as core specifications, capabilities, identification registers, etc. However, since the specification label is provided by the provider, there is a potential risk of it being falsified. To address this potential scenario, the attestation layer 125 and/or attestation agent can cause, at least in part, a verification the specification label provided by the provider based, at least in part, on the specification table read from the resource component 105 (e.g., read by the execution of spec-id discovery as described above). For example, the attestation agent reads the hardware details embedded by the vendor and compares them to the self-reported specifications to ensure accuracy. This process helps confirm the authenticity and capabilities of the resource component 105.

In one embodiment, the resource pool 103 of all resource components 105 (e.g., hardware units) managed by the infrastructure network 101 can be efficiently managed by a set of cryptographic hashes of spec-IDs. Once that set is stored in a shared location (e.g., on a blockchain), any attestation agent can efficiently query the obtained spec-ID to verify it has not been provisioned before and/or that its advertised specifications/capabilities match actual specifications/capabilities. Specifically, with respect to multiple provisioning, any spec-ID already in the set indicates an illegitimate usage of the hardware unit and should be denied.

Assuming the previous steps succeeded, the attestation protocol 305, the attestation agent combines the spec-ID with the identity of the provider (step 509) and cryptographically signs the combination (step 511) into what is referred herein to as the "bundle" (e.g., signed bundle 513, also referred to in FIG. 1 as resource bundle 127). The attestation layer 125 provides the signed bundle 513 to the service provider, and at step 515, the service provider stores the signed bundle 513 in storage (e.g., permanent storage associated with the corresponding resource component 105. In one embodiment, the storage of the signed bundle 513 can possibly on-device, if the resource component 105 has non-volatile memory. In other words, the bundle 513 is associated with the resource component 105 by storing the bundle 513 in a memory of or otherwise associated with the resource component.

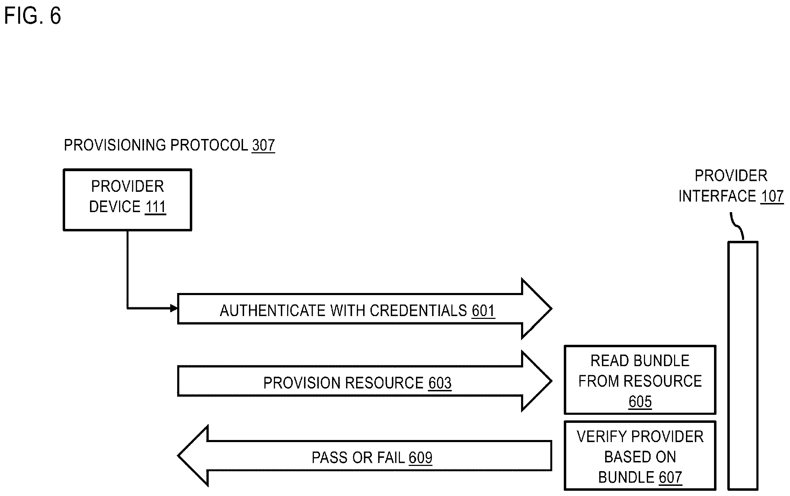

FIG. 6 is a diagram of the provisioning protocol 307, according to one example embodiment. In one embodiment, the goal of the provisioning protocol 307 is to allow for adding new resource components 105 to the resource pool 103 in a trustless but secure manner. Similarly to the attestation protocol 305, the provisioning protocol 307 starts with the authentication step 601. At step 603, the provider then provisions the resource component 105 (e.g., GPU or other component) by granting the provider interface 107 and/or its agent access to the resource component 105. Additionally, the provider device 111 sends the signed bundle corresponding to the resource component 105 or, if non-volatile write-only memory is available on the resource component 105, the provider interface 107 or its agent reads the bundle directly from the resource component 105 itself (e.g., from the memory on the component).

At step 605, when non-volatile write-only memory is unavailable, the provider interface 107 agent can read the unique identifier (e.g., UUID) associated with the resource component 105 from the resource component 105 and compare it to the one in the signed bundle that it received separately from the provider device 111. In the next step 607, the provider interface 107 verifies that the credentials from the bundle match the ones used in the authentication step. A mismatch, for instance, would indicate a Sybil attack. Note that in one embodiment, the provider interface 107 need not run the entire spec-id discovery procedure as in the attestation protocol 305.

Finally, in step 609, if all checks pass (e.g., checks in the attestation protocol 305 and/or the provisioning protocol 307, the provider interface 107 accepts the resource into their pool of resources (step 309 of the process 300). Otherwise, the process 300 fails and stops at step 311.

In summary, in one embodiment of the provisioning protocol 307, the provider interface 107 determines a request to initiate a provisioning of the resource component 105 to a resource pool 103 of the infrastructure network 101. The provisioning request, for instance, includes a proffered bundle associated with the resource component 105. The proffered bundle refers to the signed bundle 513 provided to the provider interface 107 by the provider for verification. The provider interface 107 then separately determines the bundle associated with the resource component 105 during the pre-provisioning of the resource component 105. More specifically, the determining of the bundle comprises: (1) causing, at least in part, a reading of the bundle from a non-volatile memory of the resource component 105; or (2) causing, at least in part, a reading of the specification table and the unique identifier from the resource component 105 to reconstruct the bundle. Nex, the provider interface 107 causes, at least in part, an addition of the resource component 105 to the resource pool 103 based, at least in part, on matching the proffered bundle to the bundle associated with the resource component during the pre-provisioning.

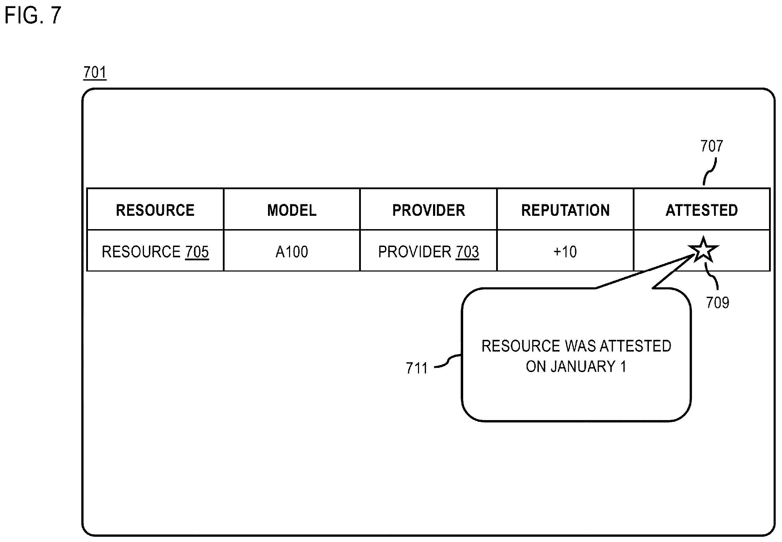

FIG. 7 is a diagram of an example user interface 701 for providing resource provider identity management and resource attestation and provisioning, according to one example embodiment. In the example of FIG. 7, a provider 703 has added a resource component 705 (e.g., a GPU model A100) to the resource pool 103 of an infrastructure network 101. A user is browsing the resource pool 103 for available resources and has selected to display information on the provider 703's resource component 705 in the UI 701. As shown, the UI 701 includes a column 707 to indicate whether the provider 703 and resource component 705 have been attested (e.g., according to the attestation protocol 305). In this example, the UI 701 indicate that the provider 703 and resource component 705 have been attested by displaying a "star" symbol 709 in attested column 707. In one embodiment, the user can select the start symbol 709 to view additional information on the attestation status of the provider 703 and resource component 705. An example of this additional information is shown in message box 711 which indicates that the "Resource was attested on January 1."

Returning to FIG. 1, in one example, the components of the system 100 may communicate over one or more communications networks 109 that includes one or more networks such as a data network, a wireless network, a telephony network, or any combination thereof. It is contemplated that the communications network 109 may be any local area network (LAN), metropolitan area network (MAN), wide area network (WAN), a public data network (e.g., the Internet), short range wireless communications network, or any other suitable packet-switched network, such as a commercially owned, proprietary packet-switched network, e.g., a proprietary cable or fiber-optic network, and the like, or any combination thereof. In addition, the communications network 109 may be, for example, a cellular telecom network and may employ various technologies including enhanced data rates for global evolution (EDGE), general packet radio service (GPRS), global system for mobile communications (GSM), Internet protocol multimedia subsystem (IMS), universal mobile telecommunications system (UMTS), worldwide interoperability for microwave access (WiMAX), Long Term Evolution (LTE) networks, 5G/3GPP (fifth-generation technology standard for broadband cellular networks / 3^{rd} Generation Partnership Project) or any further generation (e.g., 6G), code division multiple access (CDMA), wideband code division multiple access (WCDMA), wireless fidelity (Wi-Fi), wireless LAN (WLAN), Bluetooth^{®}, UWB (Ultra-wideband), Internet Protocol (IP) data casting, satellite, mobile ad-hoc network (MANET), and the like, or any combination thereof.

In one example, the system 100 or any of its components may be a platform with multiple interconnected components (e.g., a distributed framework). The system 100 and/or any of its components may include multiple servers, intelligent networking devices, computing devices, components, and corresponding software for spatial-temporal authentication. In addition, it is noted that the system 100 or any of its components may be a separate entity, a part of the one or more services, a part of a services platform, or included within other devices, or divided between any other components.

By way of example, the components of the system 100 can communicate with each other and other components external to the system 100 using well known, new or still developing protocols. In this context, a protocol includes a set of rules defining how the network nodes, e.g. the components of the system 100, within the communications network interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically affected by exchanging discrete packets of data. The packets typically comprise (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

The processes described herein for providing resource provider identity management and resource attestation/provisioning may be advantageously implemented via software, hardware (e.g., general processor, memory, input/output interface, etc.), firmware, circuitry, or a combination thereof. Such exemplary hardware for performing the described functions is detailed below.

FIG. 8 illustrates an example computer system 800 upon which embodiments of the invention as described with the processes described herein may be implemented. The computer system 800 is programmed (e.g., via computer program code or instructions) to provide resource provider identity management and resource attestation/provisioning as described herein and includes a communication mechanism such as a bus 810 for passing information between other internal and external components of the computer system 800. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 810 includes one or more parallel conductors of information so that information is transferred quickly among devices coupled to the bus 810. One or more processors 802 for processing information are coupled with the bus 810.

A processor 802 performs a set of operations on information as specified by computer program code related to providing resource provider identity management and resource attestation/provisioning. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations includes bringing information in from the bus 810 and placing information on the bus 810. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 802, such as a sequence of operation codes, constitute processor instructions, also called computer system instructions or, simply, computer instructions. Processors may be implemented as mechanical, electrical, magnetic, optical, chemical or quantum components, among others, alone or in combination.

The computer system 800 also includes a memory 804 coupled to bus 810. The memory 804, such as a random access memory (RAM) or other dynamic storage device, stores information including processor instructions for providing resource provider identity management and resource attestation/provisioning. Dynamic memory allows information stored therein to be changed by the computer system 800. RAM allows a unit of information stored at a location called a memory address to be stored and retrieved independently of information at neighboring addresses. The memory 804 is also used by the processor 802 to store temporary values during execution of processor instructions. The computer system 800 also includes a read only memory (ROM) 806 or other static storage device coupled to the bus 810 for storing static information, including instructions, that is not changed by the computer system 800. Some memory is composed of volatile storage that loses the information stored thereon when power is lost. Also coupled to bus 810 is a non-volatile (persistent) storage device 808, such as a magnetic disk, optical disk or flash card, for storing information, including instructions, that persists even when the computer system 800 is turned off or otherwise loses power.

Information, including instructions for providing resource provider identity management and resource attestation/provisioning, is provided to the bus 810 for use by the processor from an external input device 812, such as a keyboard containing alphanumeric keys operated by a human user, or one or more sensors. In one embodiment, the computer system 800 includes or otherwise has access to one or more sensors 814 which detect conditions in its vicinity and transforms those detections into physical expression compatible with the measurable phenomenon used to represent information in the computer system 800. Examples of sensors 814 include but are not limited to cameras, Lidar, positioning sensors, gyroscopes, accelerometers, and/or the like. Other external devices coupled to bus 810, include one or more actuators 816. By way of example, an actuator is a device that converts electrical signals (e.g., control signals) into physical actions, such as movement, rotation, or force. In a mobile robot or equivalent drivetrain, an actuator 816 can be used to control the wheels that enable the robot to perform various maneuvers. For example, an actuator 816 can regulate the speed and direction of the wheels. Actuators 816 can be powered by different sources, such as but not limited to electricity, pneumatic pressure, or hydraulic fluid. Some examples of actuators 816 include but are not limited to motors, solenoids, cylinders, and servos. In some embodiments, for example, in embodiments in which the computer system 800 performs all functions automatically without human input, one or more of external input device 812, display device 814 and pointing device 816 is omitted. In various embodiments, the computer system 800 is further connected via the bus 810 to a one or more camera device, flash device or Lidar device.

Computer system 800 also includes one or more instances of a communications interface 870 coupled to bus 810. Communication interface 870 provides a one-way or two-way communication coupling to a variety of external devices that operate with their own processors, such as printers, scanners and external disks. In general, the coupling is with a network link 878 that is connected to a local network 880 to which a variety of external devices with their own processors are connected. In certain embodiments, the communications interface 870 enables connection to the communications network 109 for providing resource provider identity management and resource attestation/provisioning.

The term computer-readable medium is used herein to refer to any medium that participates in providing information to processor 802, including instructions for execution. Such a medium may take many forms, including, but not limited to, non-volatile media, volatile media and transmission media. Non-volatile media include, for example, optical or magnetic disks, such as storage device 808. Volatile media include, for example, dynamic memory 804. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, any solid state medium, any magnetic medium, any optical medium, any physical medium, a RAM, any other memory chip, a carrier wave, or any other medium from which a computer can read.

Network link 878 typically provides information communication using transmission media through one or more networks to other devices that use or process the information. For example, network link 878 may provide a connection through local network 880 to a host computer 882 or to equipment 884 operated by an Internet Service Provider (ISP). ISP equipment 884 in turn provides data communication services through the public, world-wide packet-switching communications network of networks now commonly referred to as the Internet 890.

A computer called a server host 892 connected to the Internet hosts a process that provides a service in response to information received over the Internet. For example, server host 892 hosts a process that provides information representing video data for presentation at display 814. It is contemplated that the components of the system 100 can be deployed in various configurations within other computer systems, e.g., host 882 and server 892.

FIG. 9 illustrates a chip set 900 upon which embodiments of the invention, for example, the components of system 100 may be implemented. The chip set 900 is programmed to provide resource provider identity management and resource attestation/provisioning as described herein and includes, for instance, the processor and memory components described with respect to FIG. 2 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 900 includes a communication mechanism such as a input/output (I/O) interface 901 for passing information among the components of the chip set 900 and to external devices (e.g., sensors and/or actuators of a robot, transmitters/receivers for signaling a vehicle/robot/drivetrain or component thereof, etc.). A processor 903 has connectivity to the bus 901 to execute instructions and process information stored in, for example, a memory 905. The processor 903 may include one or more processing cores with each core configured to perform independently. A multi-core processor enables multiprocessing within a single physical package. Examples of a multi-core processor include two, four, eight, or greater numbers of processing cores. Alternatively or in addition, the processor 903 may include one or more microprocessors configured in tandem via the bus 901 to enable independent execution of instructions, pipelining, and multithreading. Other specialized components to aid in performing the inventive functions described herein include one or more field programmable gate arrays (FPGA) (not shown), one or more controllers (not shown), or one or more other special-purpose computer chips.

The processor 903 and accompanying components have connectivity to the memory 905 via the I/O interface 901. The memory 905 includes both dynamic memory (e.g., RAM, magnetic disk, writable optical disk, etc.) and static memory (e.g., ROM, CD-ROM, etc.) for storing executable instructions that when executed perform the inventive steps described herein to provide resource provider identity management and resource attestation/provisioning. The memory 905 also stores the data associated with or generated by the execution of the inventive steps.

## Claims

1. An apparatus comprising means for:
determining a request to initiate a pre-provisioning of a resource component to an infrastructure network, wherein the request includes a specification label that advertises one or more capabilities of the resource component;
causing, at least in part, a reading of a specification table and a unique identifier from the resource component;
causing, at least in part, a verification of the specification label based, at least in part, on the specification table;
generating a bundle based, at least in part, on the specification table and the unique identifier, wherein the bundle represents the verification of the specification label; and
associating the bundle with the resource component.

2. The apparatus of claim 1, wherein the apparatus further comprises means for:
determining another request to initiate a provisioning of the resource component to a resource pool of the infrastructure network, wherein the another request includes a proffered bundle associated with the resource component;
determining the bundle associated with the resource component during the pre-provisioning; and
causing, at least in part, an addition of the resource component to the resource pool based, at least in part, on a verification of the resource component based on matching the proffered bundle to the bundle associated with the resource component during the pre-provisioning.

3. The apparatus of claim 1 or 2, wherein the determining of the bundle comprises: (1) causing, at least in part, a reading of the bundle from a non-volatile memory of the resource component; or (2) causing, at least in part, another reading of the specification table and the unique identifier from the resource component to reconstruct the bundle.

4. The apparatus of any one of claims 1-3, wherein the generating of the bundle is further based, at least on part, on a verification that the resource component has not previously been provisioned in the infrastructure network by a provider associated with the request or another provider.

5. The apparatus of any one of claims 1-4, wherein the verification that the resource component has not previously been provisioned in the infrastructure network by the provider associated with the request or the another provider is based on determining that any prior provisioning of the resource component in the infrastructure network does not overlap in time.

6. The apparatus of any one of claims 1, wherein the apparatus further comprises means for:
determining one or more identity attributes associated with a provider of the resource component; and
generating a participation credential for the provider based on a verification of the one or more identity attributes and based on the one or more identity attributes,
wherein the participation credential identifies the provider in one or more subsequent interactions in the infrastructure network.

7. The apparatus of claim 6, wherein the one or more identity attributes is based on zero-knowledge proof of a possession of one or more identity documents.

8. The apparatus of claim 6 or 7, wherein the apparatus further comprises means for:
associating a reputation score to the participation credential of the provider based on the one or more subsequent interactions in the infrastructure network.

9. The apparatus of any one of claims 6-8, wherein the generating of the bundle is further based, at least in part, on the participation credential.

10. The apparatus of any one of claims 1-9, wherein the bundle is associated with the resource component by storing the bundle in a memory of the resource component.

11. The apparatus of any one of claims 1-10, wherein the infrastructure network is a Decentralized Physical Infrastructure Network (DePIN).

12. The apparatus of any one of claims 1-11, wherein the resource component is a hardware component.

13. A computer-implemented method comprising:
determining a request to initiate a pre-provisioning of a resource component to an infrastructure network, wherein the request includes a specification label that advertises one or more capabilities of the resource component;
causing, at least in part, a reading of a specification table and a unique identifier from the resource component;
causing, at least in part, a verification of the specification label based, at least in part, on the specification table;
generating a bundle based, at least in part, on the specification table and the unique identifier, wherein the bundle represents the verification of the specification label; and
associating the bundle with the resource component.

14. The computer-implemented method of claim 13, further comprising:
determining another request to initiate a provisioning of the resource component to a resource pool of the infrastructure network, wherein the another request includes a proffered bundle associated with the resource component;
determining the bundle associated with the resource component during the pre-provisioning; and
causing, at least in part, an addition of the resource component to the resource pool based, at least in part, on a verification of the resource component based on matching the proffered bundle to the bundle associated with the resource component during the pre-provisioning.

15. A computer program product comprising instructions which, when executed by an apparatus, cause the apparatus to perform at least the following:
determining a request to initiate a pre-provisioning of a resource component to an infrastructure network, wherein the request includes a specification label that advertises one or more capabilities of the resource component;
causing, at least in part, a reading of a specification table and a unique identifier from the resource component;
causing, at least in part, a verification of the specification label based, at least in part, on the specification table;
generating a bundle based, at least in part, on the specification table and the unique identifier, wherein the bundle represents the verification of the specification label; and
associating the bundle with the resource component.
